# FASCICULE DE BREVET EUROPEEN

(11) **EP 1 038 726 B1**
(45) Date de publication et mention de la délivrance du brevet: **17.05.2006**
(21) Numéro de dépôt: 00400578.1
(22) Date de dépôt: 03.03.2000
(51) Int. Cl.: B60P 7/08, B64D 9/00, B60R 7/02

(54) **Dispositif d'arrimage de charges**
Vorrichtung zur Sicherung von Lasten
Device for securing loads

(30) Priorité: 19.03.1999 FR 9903451
(43) Date de publication de la demande: 27.09.2000
(73) Titulaire: Renault s.a.s., 92100 Boulogne Billancourt (FR)
(72) Inventeur: Michelin, Didier, 78950 Gambais (FR)

(56) Documents cités:
- EP-A- 0 588 761
- FR-A- 2 675 442
- GB-A- 1 079 364
- US-A- 2 846 958

## Description

L'invention propose un dispositif d'arrimage de charges et plus particulièrement un dispositif d'arrimage de charges, modulable dans l'habitacle d'un véhicule automobile.

On connaît, de manière générale, des dispositifs d'arrimage de charges dans un véhicule automobile, solidarisés, en position fixe, sur les parois horizontales ou verticales de l'habitacle de ce véhicule.

De cette manière, lorsque le dispositif d'arrimage est fixé sur le plancher du véhicule, un démontage des moyens d'arrimage est nécessaire à chaque fois que l'on veut utiliser toute la surface plane de rangement. Cette solution oblige donc à des opérations fastidieuses et qui constituent une perte de temps.

De plus, ces dispositifs ne permettent pas d'adapter la position de l'arrimage en fonction de la taille et de la situation des charges dans l'habitacle. La seule solution dans ce cas étant de multiplier le nombre de points d'arrimage, augmentant ainsi le coût de cette fonction.

L'invention a pour objet de remédier à ces inconvénients en proposant un dispositif d'arrimage de charges qui permet d'accroître la modularité de l'aménagement de l'habitacle et de répondre au mieux, de cette manière, au besoin des utilisateurs en fonction du type de charges transportées.

Dans ce but, l'invention propose un dispositif d'arrimage de charges, situé sur une paroi de l'habitacle d'un véhicule automobile, comportant des moyens de blocage et de déplacement, un moyen d'arrimage et un rail de guidage, destiné à coopérer avec lesdits moyens de blocage et de déplacement, voir FR-A-2 675 442.

Selon l'invention, en position de non utilisation, le point dudit dispositif d'arrimage, le plus à l'intérieur de l'habitacle, est sensiblement affleurant par rapport à ladite paroi.

Selon une caractéristique de l'invention, le moyen d' arrimage coopère avec les moyens de blocage et de déplacement par l'intermédiaire d'un moyen de fixation, de telle sorte que ledit moyen d'arrimage soit libre en rotation selon au moins un axe.

Selon une autre caractéristique de l'invention, l'encombrement des moyens de blocage et de déplacement, en position libre dans le rail de guidage et/ou après orientation desdits moyens, est inférieur à la largeur dudit rail de guidage de telle sorte que lesdits moyens de blocage et de déplacement peuvent s'extraire dudit rail de guidage.

Selon une autre caractéristique de l'invention, les moyens de déplacement comportent un patin, destiné à coulisser dans le rail de guidage.

Selon une autre caractéristique de l'invention, les moyens de blocage comportent au moins un verrou et un moyen de rappel, destiné à coopérer avec ledit verrou.

Selon une autre caractéristique de l'invention, le moyen de rappel agit sur le verrou de telle sorte que ce dernier et le patin coopèrent avec le rail de guidage.

Selon une autre caractéristique de l'invention, un axe solidarise, à mobilité axiale, le patin, le verrou et le moyen de rappel.

Selon une autre caractéristique de l'invention, le verrou est muni d'éléments de verrouillage, destinés à coopérer, avec des moyens de réception, situés sur le rail de guidage.

Selon une autre caractéristique de l'invention, le dispositif d'arrimage comporte un premier moyen de préhension, porté par le patin et un second moyen de préhension, porté par un moyen d'actionnement.

Selon une autre caractéristique de l'invention, le moyen d'actionnement comporte des éléments de liaison destinés à coopérer avec les verrous par action sur les moyens de préhension.

Selon une autre caractéristique de l'invention, le moyen d'actionnement est lié, à mobilité axiale, au patin, par l'intermédiaire de l'axe.

Selon une autre caractéristique de l'invention, les verrous coopèrent avec le rail de guidage par l'intermédiaire de doigts de verrouillage.

D'autres avantages et caractéristiques de l'invention seront mis en évidence dans la description suivante, donnée à titre d'exemple, en référence aux dessins annexés où :
- la figure 1 est une coupe suivant 1-1 d'un dispositif d'arrimage conforme à l'invention selon un exemple de réalisation.
- la figure 2 est une vue de dessus de ce dispositif d'arrimage conforme à l'invention.
- la figure 3 est une vue suivant F du même dispositif d'arrimage.
- la figure 4 est une vue en coupe selon 4-4 d'un dispositif d'arrimage conforme à l'invention selon un autre exemple de réalisation.
- la figure 5 est une vue de dessus du dispositif d'arrimage conforme à cet autre exemple de réalisation.
- la figure 6 est une vue en coupe selon 6-6 d'un dispositif d'arrimage conforme à l'invention selon un autre exemple de réalisation.
- la figure 7 est une vue de dessus de ce dispositif d'arrimage dans une position bloquée.
- la figure 8 est une vue de dessus de ce dispositif d'arrimage dans une position libre.
- la figure 9 est une vue suivant G de ce dispositif d'arrimage dans une position bloquée, représentée en traits forts, et dans un position libre, représentée en pointillés.
- la figure 10 est une vue de dessus d'une partie de ce dispositif d'arrimage.

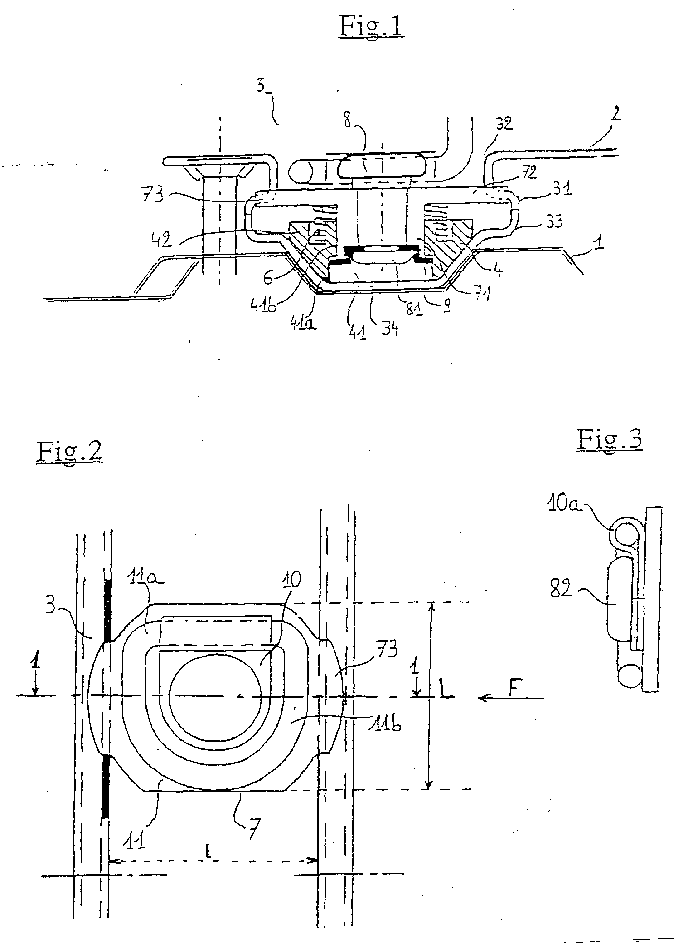

Les figures 1 à 3 représentent un dispositif d'arrimage conforme à l'invention selon un exemple de réalisation. Une surface 1 d'un véhicule automobile, pouvant être un élément de structure du plancher de ce véhicule ou d'une de ses parois verticales, est munie d'une paroi 2 de couverture. Cette paroi de couverture 2 est munie du dispositif d'arrimage conforme à l'invention. Elle porte au moins un rail de guidage 3, destiné à recevoir des moyens d'arrimage. Le rail de guidage 3 comporte une ouverture dirigée vers l'intérieur de l'habitacle du véhicule. La forme de ce rail est sensiblement symétrique de part et d'autre de son axe longitudinal.

Des lumières de verrouillage 31 sont réalisées à l'intérieur du rail de guidage 3, dans des renfoncements 33, en dessous de bossages 32 de retenue des moyens d'arrimage. Ces lumières sont régulièrement espacées selon un pas plus ou moins fin en fonction des possibilités de réglage souhaitées, tout le long du rail 3, de manière à déterminer différentes encoches de fixation des moyens d'arrimage. Le fond 34 du rail 3 possède une forme sensiblement trapézoïdale dont la petite base est orientée vers le bas.

De manière générale, les moyens d'arrimage selon l'invention se composent de deux parties. La première partie est une partie de guidage, sous la forme d'un patin 4. La seconde partie est une partie de blocage, sous la forme d'un verrou 7 comportant des languettes 73.

Le patin 4, de forme sensiblement complémentaire à celle du fond 34 du rail, repose sur les parois inclinées dudit fond, permettant ainsi un bon guidage dudit patin. Ce patin sera, de préférence, réalisé en matière ayant un bon comportement en frottement. Il comporte, de manière coaxiale, un évidement 41 composé de deux parois cylindriques 41a et 41b dont la paroi 41a, de diamètre le plus grand, se trouve du côté du fond 34 du rail de guidage 3. Ce patin 4 comporte également, de manière coaxiale, un logement 42, du côté opposé au fond 34, destiné à recevoir un ressort de rappel 6.

Un verrou 7 est logé, de manière coaxiale et à mobilité selon cet axe, par l'intermédiaire d'une partie cylindrique 71, dans l'évidement 41 du patin 4. La partie cylindrique 71 se prolonge, du côté opposé au fond 34 du rail de guidage 3, par une tête 72, reposant, sur le ressort 6, situé dans le logement 42.

La largeur de cette tête 72 est sensiblement égale à la largeur 1 du rail 3. Cette tête se prolonge par des languettes saillantes 73, en direction de chaque bord du rail 3. Les languettes 73 peuvent se loger dans les lumières 31 du rail 3 puis se bloquer, dans ces lumières, sous les bossages 32, sous l'action de pression exercée par le ressort 6, sur le dessous de la tête 72.

Le verrou 7 comporte, selon son axe vertical un évidemment qui, traversant la partie cylindrique 71 et la tête 72, reçoit un axe 8, muni d'une tête inférieure 81 et d'une tête supérieure 82. La tête inférieure 81 vient en appui, du côté du fond 34 du rail, sur une rondelle 9 de diamètre sensiblement égal à celui de la paroi cylindrique 41a de l'évidement 41 dans le patin 4, elle même en appui sur l'épaulement constitué par la jonction des parois 41a et 41b. De cette manière, les mouvements de la partie de blocage, c'est-à-dire du verrou 7, sont limités par rapport à la partie de guidage, c'est-à-dire le patin 4.

La tête supérieure 82, maintient, contre la tête 72 du verrou 7, une agrafe 10, de manière à ce que ladite agrafe puisse tourner librement autour de l'axe 8. Cette agrafe 10 possède un repli cylindrique 10a formant un palier de guidage en rotation pour une partie droite 11a d'un anneau 11. Cet anneau 11 est constitué d'une seconde partie formant une boucle 11b, reposant dans les limites de la tête 72 du verrou 7. La partie droite 11a est guidée de telle manière qu'elle puisse tourner librement selon un axe vertical passant par le centre de la tête supérieure 82 et selon un axe horizontal, passant par le repli cylindrique 10a.

Dans l'exemple de réalisation représenté, les plans de la tête supérieure 82, de l'anneau 11, quand ce dernier est en position rabattue, et de la génératrice supérieure du repli cylindrique 10a sont confondus et sensiblement à la même hauteur que le plan de la couverture 2 de la paroi 1 du véhicule automobile.

De manière générale, en position de non utilisation, le point du dispositif d'arrimage le plus à l'intérieur de l'habitacle du véhicule, à titre d'exemple l'anneau 11 ou l'agrafe 10 ou tout autre mécanisme dudit dispositif, se situe à une hauteur approximativement affleurante par rapport à la paroi de structure munie dudit dispositif d'arrimage.

A titre d'exemple, le dispositif d'arrimage de charges conforme à l'invention, quand l'anneau d'arrimage est en position de non utilisation, ne dépasse donc pas de la couverture de la paroi qui le porte. De cette façon, notamment dans le cas d'un arrimage sur le plancher d'un véhicule, on peut utiliser toute la surface de chargement sans qu'il soit nécessaire de démonter ce dispositif et sans risquer de le détériorer.

Dans l'exemple de réalisation représenté, l'anneau 11 est destiné à recevoir des attaches de retenue de charges de type sangles. Son type de fixation à l'axe 8, par l'intermédiaire de l'agrafe 10, lui permet d'être tournant pour s'orienter librement suivant le sens d'action des attaches de retenue de charges. De cette manière, l'anneau ne risque pas d'être endommagé comme les anneaux libres suivant un seul axe de rotation, selon l'état de la technique.

Le fonctionnement du dispositif d'arrimage conforme à l'invention va maintenant être expliqué.

Lorsque ce dispositif est fixe en position, les parties saillantes 73 du verrou 7 sont en appui, dans une des lumières 31 du rail 3 contre les bossages 32 correspondants, sous l'action de poussée verticale, en direction de l'intérieur de l'habitacle, du ressort de rappel 6, contre le dessous de la tête 72 dudit verrou. Le verrou 7 est donc bloqué en position dans le rail 3.

Lorsque l'on désire changer la position de l'anneau 11, il suffit d'exercer une pression sur l'axe 8 ou sur l'anneau 11, de manière générale. La pression exercée va donc comprimer le ressort de rappel 6 et le verrou 7 va descendre, dans le patin 4, jusqu'à ce que le dessous de la tête 72 vienne en butée contre ledit patin. Cette descente va permettre aux parties saillantes 73 de se libérer des lumières 31 pour entrer dans les renfoncements 33. Le verrou 7 ne sera donc plus prisonnier du rail 3.

En maintenant la pression sur l'axe 8, et en faisant coulisser celui-ci dans le rail 3, on déplace l'anneau d'arrimage 11, par l'intermédiaire du patin 4, dans ledit rail 3, jusqu'à la nouvelle position souhaitée. Cette nouvelle position correspond à la découpe de nouveaux évidements 31 dans le rail 3.

Devant cette nouvelle position, en arrêtant d'appuyer sur l'axe 8, le ressort de rappel 6 repousse le dessous de la tête 72 vers le haut et les parties saillantes 73 entrent dans les nouveaux évidements 31. Les moyens d'arrimage sont à nouveau fixes en position longitudinale dans le rail 3. Le dispositif d'arrimage conforme à l'invention peut être utilisé.

Le dispositif d'arrimage selon l'invention est également particulièrement intéressant si l'on désire séparer les moyens d'arrimage du rail 3. En effet, en appuyant sur l'axe 8, tel que précédemment décrit, les parties saillantes 73 se libèrent des évidements 31. En maintenant l'axe 8 ou l'anneau 11 en position basse dans le rail 3, on tourne ensuite l'ensemble du dispositif de sensiblement un quart de tour. Les parties saillantes 73 du verrou 7 se dégagent ainsi des renfoncement 33 et s'orientent selon le sens longitudinal du rail 3. La longueur L de la tête 72 étant inférieure à la largeur 1 du rail 3, l'ensemble du dispositif se trouve donc libre de toute retenue dans ledit rail. On peut donc enlever rapidement et simplement l'ensemble des moyens d'arrimage du rail 3.

Un tel dispositif permet donc, non seulement d'adapter la configuration des arrimages de charge au niveau du plancher de chargement du véhicule, mais aussi celle des attaches de charges au niveau des parois verticales dudit véhicule de manière à immobiliser, le plus sûrement possible le chargement transporté par ledit véhicule.

De plus, le point du dispositif d'arrimage, le plus à l'intérieur de l'habitacle, en position de non utilisation dudit dispositif, étant situé sensiblement affleurant par rapport au plan de la couverture de la paroi qu'il équipe, cette dernière, notamment s'il s'agit du plancher, peut être également utilisée, sans risque de détérioration dudit dispositif d'arrimage, lorsque l'on ne désire pas arrimer de charges.

Enfin, les moyens d'arrimage du dispositif conforme à l'invention se libèrent très rapidement du rail de guidage, à quelque endroit que ce soit dans ce dernier. Il n'est donc pas nécessaire, pour enlever l'ensemble des moyens d'arrimage, de les faire coulisser jusqu'au bout du rail de guidage 3

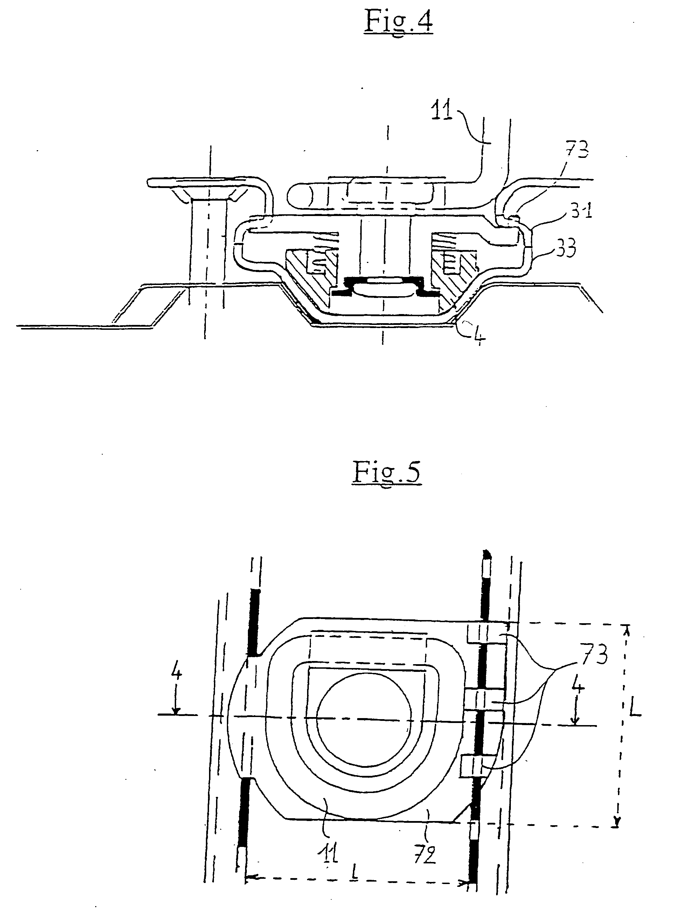

Dans un autre exemple de réalisation, représenté aux figures 4 à 5, la partie de blocage possède une forme sensiblement différente.

La tête 72 du verrou 7 possède un forme anguleuse dont les extrémités, de chaque côté du rail, descendent et viennent se loger dans les renfoncements 33 dudit rail, ce qui bloque toute rotation de ladite tête. Chacune de ces extrémités possède au moins deux parties saillantes identiques 73, dirigées verticalement vers le haut, destinées à coopérer avec autant de lumières 31, réalisées sous les bossages 32 du rail 3. Les moyens d'arrimage sont donc bloqués en position longitudinale lorsque ces parties saillantes viennent se loger dans ces lumières 31.

Le patin 4, dont la partie dirigée vers le fond du rail est toujours d'une forme sensiblement trapézoïdale, possède une hauteur sensiblement réduite, de manière à ne pas interférer avec les extrémités de la tête 72, lorsque l'on déplace cette dernière dans le rail 3.

De la même manière que précédemment décrit, il suffit d'appuyer sur l'anneau 11 ou l'axe 8 pour comprimer le ressort de rappel 6, et le verrou 7 descend, dans le patin 4, jusqu'à ce que le dessous de la tête 72 vienne en butée contre ledit patin. On pourra ainsi faire coulisser l'anneau, par l'intermédiaire du patin 4 jusqu'à ce que les parties saillantes 73 viennent coopérer avec de nouvelles lumières 31. La descente de ces parties 73, dans le rail 3, est, comme dans l'exemple de réalisation précédemment décrit, rendue possible par la forme de la partie supérieure du patin 4.

Dans ce cas, les parties saillantes 73 étant plus nombreuses que dans l'exemple de réalisation précédemment décrit, le pas entre les évidements 31 est également plus réduit, ce qui permet une plus grande modularité du dispositif que l'on peut installer, sur une couverture de paroi du véhicule, en un nombre d'endroits plus important. Ainsi, plus le nombre de parties saillantes 73 est important, plus on augmente le nombre de positions pouvant être prises par le dispositif d'arrimage conforme à l'invention.

De même que précédemment décrit, les moyens d'arrimage peuvent s'ôter rapidement et simplement du rail de guidage 3, par simple pression sur l'axe 8 et quart de tour desdits moyens d'arrimage. La longueur L des moyens d'arrimage étant inférieure à la largeur 1 du rail de guidage 3, lesdits moyens peuvent ainsi s'extraire dudit rail.

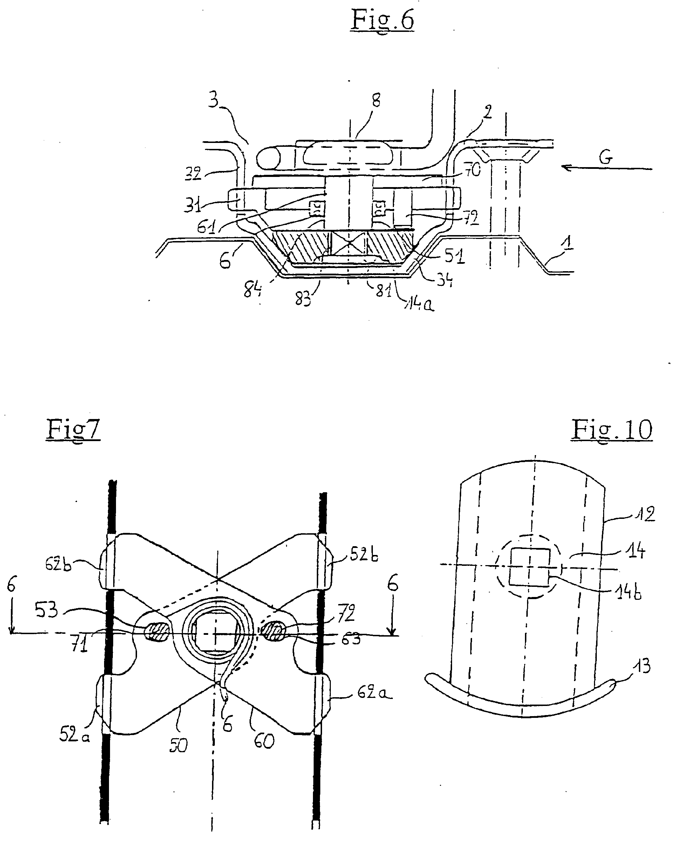

Un autre exemple de réalisation est représenté aux figures 6 à 10. Une surface 1 d'un véhicule automobile, pouvant être le plancher de ce véhicule ou une de ses parois verticales, est munie d'une paroi 2 de couverture. Cette paroi de couverture 2 est munie du dispositif d'arrimage conforme à l'invention. Elle possède au moins un rail de guidage 3, destiné à recevoir des moyens d'arrimage. La forme de ce rail de guidage est sensiblement symétrique de part et d'autre de son axe longitudinal.

Une paroi verticale 32 du rail de guidage est munie de lumières 31, régulièrement espacées, et se prolonge par un fond 34, de forme sensiblement trapézoïdale dont la petite base est orientée vers le bas.

De manière générale, les moyens d'arrimage dans cet exemple de réalisation se composent de deux parties. La première partie est une partie de guidage, sous la forme d'un patin 12. La seconde partie est une partie de blocage, sous la forme de deux verrous 50 et 60.

Le patin 12, de forme sensiblement complémentaire à celle du fond 34 du rail, repose sur les parois inclinées dudit fond, permettant ainsi un bon guidage dudit patin. Une extrémité de ce patin est munie d'un premier moyen de préhension, sous la forme d'une languette verticale 13, dirigée vers le haut du rail de guidage 3 et dont le bord supérieur est sensiblement affleurant par rapport au plan de la couverture 2.

Un évidement 14, constitué, à titre d'exemple, de deux parois 14a et 14b, est situé selon son axe vertical, dans ce patin. La paroi 14a, cylindrique et de largeur supérieure par rapport à la paroi 14b, débouche dans le fond 34 du rail. Cette paroi se prolonge, en direction du haut du rail de guidage, par la paroi parallélépipèdique 14b, de largeur sensiblement inférieure.

Les verrous 50 et 60, de forme sensiblement rectangulaire, sont identiques et logés dans le rail de guidage 3, l'un sur l'autre. Ces verrous possèdent deux évidements cylindriques 51 et 61, coaxiaux avec l'évidement 14. Dans l'exemple de réalisation représenté, chacun de ces évidements 51 et 61 est constitué d'une première paroi cylindrique prolongée par une seconde paroi cylindrique, d'un diamètre inférieur.

Les parois cylindriques de plus grand diamètre des deux verrous sont en regard l'une de l'autre de manière à dégager un espace entre lesdits verrous. Un ressort de rappel 6 est logé dans cet espace, coaxialement avec les évidements 51 et 61. Ce ressort de rappel tend à rapprocher, deux à deux, les extrémités des verrous 50 et 60.

Chacune des extrémités des verrous est munie d'un doigt de verrouillage 52a, 52b et 62a, 62b, destiné à coopérer avec les lumières 31 dans chaque paroi verticale 32 du rail de guidage 3. La forme de ces doigts de verrouillage leur permet, dans un sens de rotation, de s'engager dans les lumières 31 et dans l'autre sens de rotation, de se dégager desdites lumières. Les deux doigts de chaque verrou ont des formes telles que leurs comportements, par rapport aux lumières 31, sont opposés, pour un même sens de rotation.

Le verrou inférieur 50, s'étend transversalement, selon une diagonale, pour coopérer par le doigt 52a avec une lumière 31 d'un côté du rail et, par le doigt 52b, avec la lumière 31, de l'autre côté, appartenant au pas suivant dans ledit rail. Le verrou supérieur 60, s'étend transversalement selon une autre diagonale, pour coopérer par le doigt 62a avec une lumière 31 au même pas que le doigt 52a mais de l'autre côté du rail par rapport à ce dernier et, par le doigt 62b, avec une lumière 31, au même pas que le doigt 52b mais de l'autre côté du rail de guidage par rapport à ce dernier. De cette manière, les verrous 50 et 60 forment une croix dont chaque extrémité coopère avec une lumière 31.

Chaque verrou 50 et 60 possède un perçage sensiblement oblong 53 et 63, non représenté, destiné à coopérer respectivement avec des ergots 71 et 72, s'étendant verticalement sous une palette 70, logée dans le rail de guidage 3, au dessus desdits verrous. La palette 70 possède une forme sensiblement rectangulaire et est munie, à une extrémité opposée à la languette verticale 13, d'un second moyen de préhension, sous la forme d'une languette verticale 73, dirigée vers le haut du rail de guidage 3. Cette palette 70 possède un trou oblong 74, dont une des extrémités est coaxiale aux évidements 51 et 61 des verrous 50 et 60 et à l'évidement 14 du patin 12.

Un axe 8 est logé dans les évidements 14, 51, 61 et l'extrémité du trou 74, ces derniers étant coaxiaux. Cet axe 8 est muni de deux têtes, une tête inférieure 81 et une tête supérieure 82. La tête inférieure 81, côté fond 34 du rail est logée dans l'évidement 14 et vient en butée à la jonction de la paroi cylindrique 14a et de la paroi rectangulaire 14b. Cette tête 81 est prolongée par une partie rectangulaire 83, logée contre la paroi rectangulaire 14b. De cette manière, l'axe 8 et le patin 12 sont rendus solidaires l'un par rapport à l'autre.

La partie rectangulaire de l'axe est prolongée par une partie cylindrique 84 qui solidarise, par l'intermédiaire de leurs évidements centraux respectifs, les verrous 50, 60, et la palette 70. Ces différents éléments restent cependant libres en rotation autour de l'axe 8.

La tête supérieure 82 de l'axe 8 est en butée contre l'une des extrémités du trou oblong 74, dans la palette 70, et emprisonne, contre ladite palette, une agrafe 10. L'agrafe 10 reste cependant libre en rotation autour de cet axe 8.

L'agrafe 10 est placée sur la palette 70 et possède un repli cylindrique 10a formant un palier de guidage en rotation pour un anneau 11. Cet anneau est libre de pivoter à l'intérieur du repli cylindrique 10a, de la même manière que l'anneau 11 selon l'exemple de réalisation précédemment décrit. Il est destiné à recevoir des attaches de retenue de charges de type sangles. Sa solidarisation avec l'axe 8, par l'intermédiaire de l'agrafe 10, lui permet de s'orienter librement suivant le sens d'action des attaches de retenue de charges.

De cette manière, l'anneau ne risque pas d'être endommagé comme les anneaux libres suivant un seul axe de rotation, selon l'état de la technique.

Dans l'exemple de réalisation représenté, les plans de la tête supérieure 82, de l'anneau 11, en position rabattue, et de la génératrice supérieure du repli cylindrique 10a se situent sensiblement à la même hauteur que le plan de la paroi de couverture 2.

Le fonctionnement du dispositif d'arrimage conforme à l'invention, selon cet autre exemple de réalisation, va maintenant être explicité.

Lorsque le dispositif se trouve en position bloquée, les doigts de verrouillage 52a, 52b, 62a, 62b, coopèrent chacun, en butée, dans une lumière 31 du rail 3. Le ressort de rappel 6, qui tend à rapprocher les extrémités opposées des verrous 50 et 60, c'est-à-dire le doigt 52a du doigt 62b et le doigt 52b du doigt 62a, assure une pression suffisamment importante desdits doigts dans ces lumières 31, pour garantir la sûreté de la fixation du dispositif d'arrimage conforme à l'invention. Les ergots 71 et 72 de la palette 70 viennent en butée contre l'une des extrémités respectivement des trous oblongs 53 et 63.

Lorsque l'on veut déplacer l'anneau 11 d'arrimage ou ôter l'ensemble des moyens d'arrimage, il suffit de pousser, simultanément et en sens opposés selon l'axe du rail 3, sur le premier moyen de préhension, la languette verticale 13, et sur le second moyen de préhension, la languette verticale 73, de façon à rapprocher lesdites languettes. Ceci revient à "pincer" entre deux doigts, les languettes 13 et 73 pour les rapprocher.

De cette manière, les ergots 71 et 72 de la palette 70 suivent le déplacement longitudinal de ladite palette dans le rail de guidage 3. Ainsi, l'ergot 71 se déplace dans le trou oblong 53 jusqu'à ce qu'il vienne en butée contre l'autre extrémité dudit trou et l'ergot 72 se déplace dans le trou oblong 63 jusqu'à ce qu'il vienne en butée contre l'autre extrémité dudit trou.

Cette coopération, respectivement de l'ergot 71 avec le trou 53 et de l'ergot 72 avec le trou 63 des verrous 50 et 60, transmet le déplacement de la palette aux dits verrous qui effectuent alors une rotation autour de l'axe 8. Les doigts de verrouillage 52a et 62a ainsi que 52b et 62b, respectivement, se rapprochent donc et se libèrent des lumières 31 dans lesquelles ils étaient en butée.

Le déplacement longitudinal indépendant, par action sur les languettes 13 et 73, de la palette 70 dans le rail de guidage 3 est possible jusqu'à ce que la partie cylindrique 84 vienne en butée contre l'autre extrémité du trou oblong 74. La course de cette partie cylindrique 84 correspond à celle nécessaire pour que les ergots 71 et 72 entraînent les verrous 50 et 60 de manière à dégager totalement leurs doigts de verrouillage des lumières 31 du rail de guidage 3. L'anneau d'arrimage 11 est alors libre en déplacement longitudinal dans ce rail.

En maintenant la palette 70 et le patin 12 rapprochés, on peut donc déplacer l'anneau d'arrimage vers la nouvelle position souhaitée. Devant cette position, en relâchant la palette et le patin, les doigts de verrouillage 52a et 62a ainsi que 52b et 62b des verrous 50 et 60, sous l'action du ressort de rappel 6, s'écartent. Ces doigts s'engagent alors dans les lumières 31 du rail correspondant à la nouvelle position.

Les doigts de verrouillage des verrous 50 et 60 étant identiques, selon cet exemple de réalisation, le déplacement de l'anneau d'arrimage peut se faire par simple déplacement du doigt 62b vers la lumière où était logé le doigt 52a, ce qui correspond à un pas entre lesdites lumières. De cette manière, on dispose d'un grand nombre de positions de blocage, pour le dispositif d'arrimage selon l'invention, sur la couverture de la paroi qui le porte.

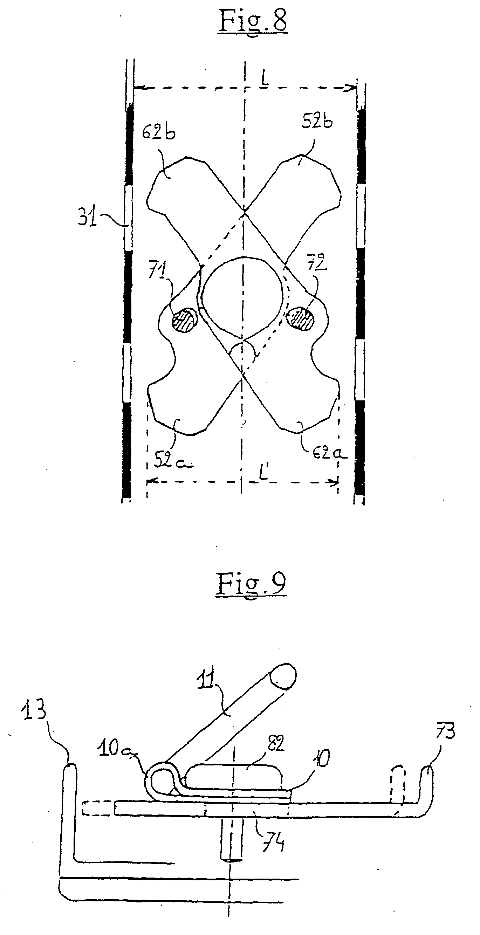

On peut également retirer facilement l'ensemble des moyens d'arrimage du rail de guidage 3 en maintenant rapprochés les languettes 13 et 73. En effet, comme représentés sur la figure 8, lorsque les doigts de verrouillages sont libérés des lumières 31, la largeur 1' de l'ensemble des moyens d'arrimage est inférieure à la largeur 1 du rail de guidage 3.On peut donc extraire lesdits moyens d'arrimage dudit rail de guidage 3, de manière facile et rapide.

L'utilisateur du véhicule ainsi équipé peut donc obtenir une configuration optimale de l'espace de rangement dudit véhicule, quelque soit le type de chargement transporté. De plus, en position de non utilisation, l'affleurement, par rapport à la paroi du véhicule, du point de ce dispositif d'arrimage, le plus à l'intérieur de l'habitacle, évite, notamment dans le cas d'un plancher, de démonter ledit dispositif lorsque l'on veut disposer de toute la surface de chargement.

Enfin, l'agrafe 10 étant libre en rotation autour de l'axe 8 et l'anneau 11 pouvant pivoter librement dans le repli 10a de ladite agrafe, ledit anneau peut s'orienter dans tous les sens, en fonction des directions des forces exercées par le chargement du véhicule sur les attaches de retenue. Il ne risque donc pas d'être détérioré en cours d'utilisation.

Le dispositif d'arrimage conforme à l'invention ne se limite pas aux exemples précédemment décrits mais englobe tout dispositif d'arrimage de charges, situé sur une paroi d'un véhicule automobile, déplaçable le long de cette paroi et dont le point le plus à l'intérieur de l'habitacle, en position de non utilisation, est sensiblement affleurant par rapport à ladite paroi.

## Revendications

1. Dispositif d'arrimage de charges, situé sur une paroi (2) de l'habitacle d'un véhicule automobile, comportant des moyens de blocage et de déplacement (4, 7, 12, 50, 60), un moyen d'arrimage (11), et un rail de guidage (3), destiné à coopérer avec lesdits moyens de blocage et de déplacement (4, 7, 12, 50, 60), **caractérisé en ce que,** en position de non utilisation, le point dudit dispositif d'arrimage, le plus à l'intérieur de l'habitacle, est affleurant par rapport à ladite paroi (2).

2. Dispositif d'arrimage selon la revendication 1, **caractérisé en ce que** le moyen d'arrimage (11) coopère avec les moyens de blocage et de déplacement (4, 7, 12, 50, 60), par l'intermédiaire d'un moyen de fixation (10), de telle sorte que ledit moyen d'arrimage soit libre en rotation selon au moins un axe.

3. Dispositif d'arrimage selon l'une quelconque des revendications précédentes, **caractérisé en ce que** l'encombrement (L, 1') des moyens de blocage et de déplacement (4, 7, 12, 50, 60), en position libre dans le rail de guidage (3) et/ou après orientation desdits moyens, est inférieur à la largeur (1) dudit rail de guidage (3) de telle sorte que lesdits moyens de blocage et de déplacement peuvent s'extraire dudit rail de guidage (3).

4. Dispositif d'arrimage selon l'une quelconque des revendications précédentes, **caractérisé en ce que** les moyens de déplacement comportent un patin (4, 12), destiné à coulisser dans le rail de guidage (3).

5. Dispositif d'arrimage selon l'une quelconque des revendications précédentes, **caractérisé en ce que** les moyens de blocage comportent au moins un verrou (7, 50, 60) et un moyen de rappel (6), destiné à coopérer avec ledit verrou (7, 50, 60).

6. Dispositif d'arrimage selon la revendication 5, **caractérisé en ce que** le moyen de rappel (6) agit sur le verrou (7, 50, 60) de telle sorte que ce dernier et le patin (4, 12) coopèrent avec le rail de guidage (3).

7. Dispositif d'arrimage selon la revendication 6, **caractérisé en ce qu'**un axe (8) solidarise, à mobilité axiale, le patin (4, 12), le verrou (7, 50, 60) et le moyen de rappel (6).

8. Dispositif d'arrimage selon la revendication 7, **caractérisé en ce que** le verrou (7) est muni d'éléments de verrouillage (73), destinés à coopérer, avec des moyens de réception (31), situés sur le rail de guidage (3).

9. Dispositif d'arrimage selon la revendication 7, **caractérisé en ce que** ledit dispositif comporte un premier moyen de préhension (13), porté par le patin (12) et un second moyen de préhension (73), porté par un moyen d'actionnement (70).

10. Dispositif d'arrimage selon la revendication 9, **caractérisé en ce que** le moyen d'actionnement (70) comporte des éléments de liaison (71, 72) destinés à coopérer avec les verrous (50, 60) par action sur les moyens de préhension (13, 73).

11. Dispositif d'arrimage de charges selon la revendication 10, **caractérisé en ce que** le moyen d' actionnement (70) est Iié, à mobilité axiale, au patin (12), par l'intermédiaire de l'axe (8).

12. Dispositif d'arrimage selon la revendication 11, **caractérisé en ce** les verrous (50, 60) coopèrent avec le rail de guidage (3) par l'intermédiaire de doigts de verrouillage (52a, 52b, 62a, 62b).

13. Dispositif d'arrimage selon l'une quelconque des revendications précédentes, **caractérisé en ce** le moyen d'arrimage (11) est un anneau.

## Claims

1. A device for securing loads, which is disposed on a wall (2) of the passenger compartment of a motor vehicle, comprising blocking and displacement means (4, 7, 12, 50, 60), a securing means (11), and a guide rail (3) which is intended to co-operate with said blocking and displacement means (4, 7, 12, 50, 60), **characterised in that** in the position of non-use the point of said securing device which is most inward of the passenger compartment is flush with respect to said wall (2).

2. A securing device according to claim 1 **characterised in that** the securing means (11) co-operates with the blocking and displacement means (4, 7, 12, 50, 60) by way of a fixing means (10) in such a way that said securing means is freely rotatable on at least one axis.

3. A securing device according to either one of the preceding claims **characterised in that** the space (L, 1') occupied by the blocking and displacement means (4, 7, 12, 50, 60) in the free position in the guide rail (3) and/or after orientation of said means is less than the width (1) of said guide rail (3) in such a way that said blocking and displacement means can be extracted from said guide rail (3).

4. A securing device according to any one of the preceding claims **characterised in that** the displacement means comprise a shoe (4, 12) intended to slide in the guide rail (3).

5. A securing device according to any one of the preceding claims **characterised in that** the blocking means comprise at least one lock member (7, 50, 60) and a return means (6) intended to co-operate with said lock member (7, 50, 60).

6. A securing device according to claim 5 **characterised in that** the return means (6) acts on the lock member (7, 50, 60) in such a way that the latter and the shoe (4, 12) co-operate with the guide rail (3).

7. A securing device according to claim 6 **characterised in that** a shaft (8) fixes in respect of axial mobility the shoe (4, 12), the lock member (7, 50, 60) and the return means (6).

8. A securing device according to claim 7 **characterised in that** the lock member (7) is provided with locking elements (73) intended to co-operate with receiving means (31) provided on the guide rail (3).

9. A securing device according to claim 7 **characterised in that** said device comprises a first gripping means (13) carried by the shoe (12) and a second gripping means (73) carried by an actuating means (70).

10. A securing device according to claim 9 **characterised in that** the actuating means (70) comprises connecting elements (71, 72) intended to co-operate with the lock members (50, 60) by acting on the gripping means (13, 73).

11. A load securing device according to claim 10 **characterised in that** the actuating means (70) is connected in respect of axial mobility to the shoe (12) by way of the shaft (8).

12. A securing device according to claim 11 **characterised in that** the lock members (50, 60) co-operate with the guide rail (3) by way of locking fingers (52a, 52b, 62a, 62b).

13. A securing device according to any one of the preceding claims **characterised in that** the securing means (11) is a ring.

## Patentansprüche

1. Vorrichtung zur Befestigung von Lasten, die an einer Wand (2) der Fahrgastzelle eines Kraftfahrzeugs angeordnet ist, welche Mittel zur Arretierung und zur Verstellung (4, 7, 12, 50, 60), ein Befestigungsmittel (11) und eine Führungsschiene (3) aufweist, die dafür bestimmt ist, mit den Mitteln zur Arretierung und zur Verstellung (4, 7, 12, 50, 60) zusammenzuwirken, **dadurch gekennzeichnet, dass** in Nicht-Verwendungsposition der am weitesten im Inneren der Fahrgastzelle gelegene Punkt der Befestigungsvorrichtung bündig im Verhältnis zur Wand (2) ist.

2. Befestigungsvorrichtung nach Anspruch 1, **dadurch gekennzeichnet, dass** das Befestigungsmittel (11) mit den Mitteln zur Arretierung und zur Verstellung (4, 7, 12, 50, 60) über ein Fixierungsmittel (10) derart zusammenwirkt, dass das Befestigungsmittel in Drehung gemäß mindestens einer Achse frei ist.

3. Befestigungsvorrichtung nach irgendeinem der vorangegangenen Ansprüche, **dadurch gekennzeichnet, dass** der Platzbedarf (L, I') der Mittel zur Arretierung und zur Verstellung (4, 7, 12, 50, 60) in freier Position in der Führungsschiene (3) und/oder nach Ausrichtung der Mittel niedriger als die Breite (1) der Führungsschiene (3) ist, derart, dass die Mittel zur Arretierung und zur Verstellung sich aus der Führungsschiene (3) entfernen können.

4. Befestigungsvorrichtung nach irgendeinem der vorangegangenen Ansprüche, **dadurch gekennzeichnet, dass** die Mittel zur Verstellung ein Gleitstück (4, 12) aufweisen, das dafür bestimmt ist, in der Führungsschiene (3) zu gleiten.

5. Befestigungsvorrichtung nach irgendeinem der vorangegangenen Ansprüche, **dadurch gekennzeichnet, dass** die Mittel zur Arretierung mindestens einen Riegel (7, 50, 60) und ein Rückstellmittel (6) aufweisen, das dazu bestimmt ist, mit dem Riegel (7, 50, 60) zusammenzuwirken.

6. Befestigungsvorrichtung nach Anspruch 5, **dadurch gekennzeichnet, dass** das Rückstellmittel (6) auf den Riegel (7, 50, 60) derart einwirkt, dass dieser letztere und das Gleitstück (4, 12) mit der Führungsschiene (3) zusammenwirken.

7. Befestigungsvorrichtung nach Anspruch 6, **dadurch gekennzeichnet, dass** eine Achse (8) mit axialer Beweglichkeit das Gleitstück (4, 12), den Riegel (7, 50, 60) und das Rückstellmittel (6) fest miteinander verbindet.

8. Befestigungsvorrichtung nach Anspruch 7, **dadurch gekennzeichnet, dass** der Riegel (7) mit Verriegelungselementen (73) versehen ist, die dafür bestimmt sind, mit Aufnahmemitteln (31) zusammenzuwirken, die auf der Führungsschiene (3) angeordnet sind.

9. Befestigungsvorrichtung nach Anspruch 7, **dadurch gekennzeichnet, dass** die Vorrichtung ein erstes Greifmittel (13), das durch das Gleitstück (12) getragen wird, und ein zweites Greifmittel (73), das durch ein Betätigungsmittel (70) getragen wird, aufweist.

10. Befestigungsvorrichtung nach Anspruch 9, **dadurch gekennzeichnet, dass** das Betätigungsmittel (70) Verbindungselemente (71, 72) aufweist, die dafür bestimmt sind, mit den Riegeln (50, 60) durch Einwirkung auf die Greifmittel (13, 73) zusammenzuwirken.

11. Befestigungsvorrichtung für Lasten nach Anspruch 10, **dadurch gekennzeichnet, dass** das Betätigungsmittel (70) mit axialer Beweglichkeit an dem Gleitstück (12) über die Achse (8) verbunden ist.

12. Befestigungsvorrichtung nach Anspruch 11, **dadurch gekennzeichnet, dass** die Riegel (50, 60) mit der Führungsschiene (3) über Verriegelungsfinger (52a, 52b, 62a, 62b) zusammenwirken.

13. Befestigungsvorrichtung nach irgendeinem der vorangegangenen Ansprüche, **dadurch gekennzeichnet, dass** das Befestigungsmittel (11) ein Ring ist.
